# EUROPEAN PATENT SPECIFICATION

(11) **EP 1 791 907 B1**
(45) Date of publication and mention of the grant of the patent: **16.06.2010**
(21) Application number: 05804904.0
(22) Date of filing: 21.09.2005
(51) Int. Cl.: C08L 51/04

(54) **STYRENE-BASED THERMOPLASTIC RESIN COMPOSITIONS**
THERMOPLASTISCHE HARZZUSAMMENSETZUNGEN AUF STYROLBASIS
COMPOSITIONS DE RESINE THERMOPLASTIQUE A BASE DE STYRENE

(30) Priority: 21.09.2004 KR 20040075637
(43) Date of publication of application: 06.06.2007
(73) Proprietor: LG Chem Ltd., Seoul 150-721 (KR)
(72) Inventor: KANG, Byoung-il, Yuseong-gu, Daejeon 305-752 (KR); LEE, Chan-hong, Yuseong-gu, Daejeon 305-721 (KR); YOU, Han-jong, Yuseong-gu, Daejeon 305-503 (KR); KIM, Seong-lyong, Daejeon 305-761 (KR)
(74) Representative: Goddar, Heinz J.
(86) International application number: PCT/KR2005/003126
(87) International publication number: WO 2006/033547

(56) References cited:
- WO-A1-98/33853
- JP-A- 7 278 362
- JP-A- 8 325 415
- JP-A- 2001 026 682
- JP-A- 2003 096 246
- US-A- 5 334 657
- US-B1- 6 380 305

## Description

### Technical Field

The present invention relates to a styrene-based thermoplastic resin composition. More particularly, the present invention relates to a styrene-based thermoplastic resin composition in which a styrene-based block copolymer is used to effectively compatibilize a styrene-based resin with an olefinic resin, and the crystalline properties of the olefinic resin are controlled. Thus, the inventive composition is excellent in chemical resistance and thermal properties and has a great improvement, particularly in gloss, over the existing styrene-based blend resin.

### Background Art

In the prior art, many studies and patents on the compatibilization of styrene-based resins and olefinic resins were reported. US patent No. 5,278,232 discloses a method of preparing a styrene-based resin with elongation and impact resistance, in which a styrene-butadiene block copolymer having a styrene content of 50-85% by weight is used as a compatibilizer for a blend of styrene-based resin and olefinic resin.

Also, US patent No. 5,334, 659 discloses a method of preparing a resin composition with excellent chemical stability, in which a styrene-isoprene block copolymer (SIS) having a styrene content of 25-50% by weight is used as a compatibilizer for a blend of styrene-based resin and olefinic resin.

The above two patents are characterized in that the compatibilizer, the styrene-based resin and the olefinic resin are simultaneously used to realize the desired physical properties. However, they have shortcomings in that they show significant reductions in the gloss and rigidity of the resin blend, and particularly, more than 10 parts by weight of the compatibilizer with high production cost is used, leading to a reduction in the economic factor of the resin blend

Accordingly, the present inventors have conducted studies to overcome the above-described problems, particularly reductions in gloss and mechanical properties, and as a result, have found that when a modified olefinic resin is added to a styrene-based resin, a thermoplastic resin composition having improvements in not only gloss and chemical resistance but also thermal and mechanical properties can be prepared.

### Disclosure of Invention

### Technical Solution

It is an object of the present invention to provide a styrene-based thermoplastic resin composition which is excellent in chemical resistance and thermal properties and has an improvement, particularly in gloss, over the existing styrene-based blend resin.

The above and other objects of the present invention can be accomplished by the present invention as described below. Hereinafter, the present invention will be described in detail.

The styrene-based thermoplastic resin composition according to the present invention comprises:

(A) 50-90 parts by weight of a rubber-modified styrene-containing graft polymer containing;

(B) 10-50 parts by weight of a modified olefinic resin containing 0.2-1.0 parts, based on 100 parts by weight of the olefinic resin, of a nucleating agent; and

(C) 2-10 parts by weight, based on 100 parts by weight of the sum of the components (A) and (B), of a linear styrene-based block copolymer.

Each of the components will now be described in detail.

(A) Graft copolymer containing rubber-modified styrene

Examples of the rubber-modified styrene-containing graft copolymer used in the present invention include copolymers of styrene with other materials, and rubber-modified styrene resins, and preferably, rubber-modified high-impact polystyrene (HIPS).

The graft copolymer component containing rubber-modified styrene is used in an amount of 50-90 parts by weight and preferably 65-85% by weight, based on 100 parts by weight of the sum of the graft polymer and the modified olefinic resin component. If the content of the graft copolymer component containing rubber-modified styrene is less than 50 parts by weight, it will lead to low impact strength, thus making it difficult to balance the properties of the composition, and if it is more than 90 parts by weight, it will lead to reductions in the mechanical rigidity and thermal properties of the composition.

Also, the graft copolymer containing rubber-modified styrene contains, for example, poly butadiene rubber or styrene-butadiene rubber, in an amount of 5-15% by weight based on 100% by weight of the graft copolymer.

The rubber-modified high impact polystyrene, which is preferably used as the rubber-modified styrene-containing graft copolymer, is general high-impact polystyrene prepared by the known polymerization process. Examples of the rubber component used in the high-impact polystyrene include polybutadiene rubber and styrene-butaliene rubber. The content of the rubber component varies within a range of 5-15% by weight based on the weight of the graft copolymer, depending on the desired properties.

(B) Modified olefinic resin

As used herein, the term "olefinic resin" means a homopolymer of ethylene or propylene, or a copolymer thereof. Specific examples of the olefinic resin include low-density polyethylene, high-density polyethylene, polypropylene and an ethylene-propylene copolymer, and these polymers may be used alone or in a mixture of two more thereof.

The olefmic resin used in the present invention preferably has a number-average molecular weight of 50,000-100,000.

When the melt flow index (MFI) of the olefinic resin was maintained at a level of less than 2 (190 °C/2.16 □), sufficient properties of a blend were realized. The olefinic resin preferably has a melt flow index of less than 1.

To improve the rigidity and surface hardness and scratch resistance of the olefinic resin and to control the crystalline properties (e.g., crystallization rate and crystal size) of the olefinic resin, a nucleating agent is generally used. Examples of the nucleating agent include 3,4-dimethyldibenzylidene, bis(2,5-methylbenzylidene)sorbitol, bis(para-ethylbenzylidene), sodium di(4-tert-buthylphenyl)phosphate, dibenzylidene sorbitol (DBS), aluminum para-tert-butyl benzoate (ALPTBBA), para-tert-butyl benzoic acid sodium salt (PTBBNa), and talc, and among them, preferred are 3,4-dimethyldibenzylidene, and bis(2,5-methylbenzylidene)sorbitol. The nucleating agent is used in an amount of 0.2-1.0 part by weight based on 100 parts by weight of the modified olefinic resin.

The olefinic resin component modified by the addition of the nucleating agent is used in an amount of 10-50 parts by weight and preferably 10-15 parts by weight, based on 100 parts by weight of the sum of the rubber-modified styrene-containing graft polymer and the olefinic resin. If the content of the modified olefinic resin is less than 10 parts by weight, it will lead to reductions in the mechanical rigidity and thermal properties of the composition, and if it is more than 50 parts by weight, it will lead to a reduction in the impact strength of the composition.

(C) Linear styrene-based block copolymer

The linear styrene-based block copolymer used in the present invention is a compound comprising styrene and olefin repeat units, examples of which include linear styrene-butadiene block copolymers, linear styrene-isoprene block copolymers, linear styrene-ethylene-propylene block copolymers, linear styrene-butadiene-styrene block copolymers, linear styrene-butadiene-propylene block copolymers, linear styrene-isopreene-styrene block copolymers, and linear styrene-butadiene-propylene-styrene block copolymers. This linear styrene-based block copolymer is in the form of a diblock, a triblock, a tetrablock or pentablock, and has a styrene content of 30-50% by weight.

The linear styrene-based block polymer is used in an amount of 2-10 parts by weight and preferably 2-5 parts by weight, based on 100 parts by weight of the sum of the rubber-modified styrene-containing graft polymer and the modified olefinic resin. If the amount of use of the linear styrene-based block copolymer is less than 2 parts by weight, it will result in a reduction in the compatibility of a matrix and a dispersion p hase, and if it is more than 10 parts by weight, it will cause the problem of cost.

The resin composition according to the present invention may additionally contain, if necessary, 5 parts by weight of other additives, such as a thermal stabilizer, an antioxidant, a lubricating agent, an optical stabilizer, a flame retardant, a UV stabilizer, an antistatic agent, a coloring agent, a filler and an impact reinforcing agent. In addition, other resins or rubber components may also be used in the inventive composition.

As described above, in the styrene-based thermoplastic resin composition according to the present invention, a styrene-based block copolymer is used to effectively compatibilize a styrene-based resin with an olefinic resin, and the crystalline properties of the olefinic resin are controlled. Thus, the inventive composition is excellent in chemical resistance and thermal properties and has a great improvement, particularly in gloss, over the existing styrene-based blend resin.

### Best Mode for Carrying Out the Invention

Hereinafter, the present invention will be described in detail by examples. It is to be understood, however, that these examples are for illustrative purpose only are not construed to limit the scope of the present invention.

[Examples]

The preparation and specification of the rubber-modified styrene-containing graft polymer (A), modified olefinic resin (B) and linear styrene-based block copolymer used in the following examples are as follows.

(A) Rubber-modified styrene-containing graft polymer

A high-impact polystyrene resin (hereinafter, referred to as "HIPS-1") is composed of particles with a size of 0.6∼1.0 □ and less than 10 parts by weight of rubber with a size of 2-4 □.

A high-impact polystyrene resin (hereinafter, referred to as "HIPS-2") is composed of rubber with a size of 2.5 □.

A high-impact polystyrene resin (hereinafter, referred to as "HIPS-3") is composed of rubber with a size of 4 □.

The resins HIPS-1, HIPS-2 and HIPS-3 have the same rubber content, and their basic properties are shown in Table 1 below.

(B) Modified olefinic resin

The olefmic resin used in the present invention is a propylene resin having a melt flow index of 0.1 g/10 min (190 °C/2.16 kg) and a number average molecular weight of 70,000.

To modify the crystalline properties of the propylene resin, bis(2,5-methylbenzylidene)sorbitol as a nucleating agent was added to the propylene resin in an amount of 0.3 parts by weight based on 100 parts by weight of the propylene resin. The mixture was placed in a twin extruder at 220 °C to prepare a propylene resin with controlled crystalline properties.

Propylene resins used in the present invention are as follows:

(B)-1: general propylene resin;

(B)-2: modified propylene resin with controlled crystalline properties prepared as described above;

(C)-1: styrene-butadiene-styrene, a linear block copolymer having a styrene content of 40%;

(C)-2: styrene-butadiene-styrene, a radial block copolymer having a styrene content of 40%; and

(C)-3: styrene-butadiene-propylene, a linear block copolymer having a styrene content of 40%.

[Examples 1-6]

The components prepared as described above were mixed with each other at a ratio given in Table 2 below. In Table 2, the amount of the component (C) was based on 100 parts by weight of the sum of the components (A) and (B). The mixture was extruded through a twin extruder to prepare resin pellets. The prepared resin pellets were injection-molded at 220 °C, and the injected samples were evaluated and analyzed. The results are shown in Table 2.

The samples prepared as described above were measured for their properties in the following manner.

1) Izod impact strength (1/4 inches; notched at 23 °C; kg·cm/cm): measured according to ASTM D256.

2) Tensile strength (50 mm/min; kg/□): measured according to ASTM D638.

3) Gloss: measured at 45° and 60° according to ASTM D638.

4) Chemical resistance: the samples were applied with concentrated sulfuric acid and then visually observed for the occurrence of cracks for 30 minutes, and the results were evaluated on the basis of the following criteria:

A: no crack

B: showing fine cracks

C: showing many fine cracks

D: showing thick cracks

E: cut following thick cracks

5) Thermal deformation temperature (HDT; 1/4 inches; load of 18.5 kg/cm²): measured according to ASTM D648.

**Table 1**

| | HIPS-1 | HIPS-2 | HIPS-3 |
|---|---|---|---|
| Impact strength | 12 | 10 | 11 |
| Tensile strength | 346 | 276 | 272 |
| Gloss (45°) | 103 | 82 | 70 |
| Chemical resistance | E | E | D |
| Thermal deformation temperature (°C) | 80 | 80 | 78 |

**Table 2**

| | | Examples | | | | | |
|---|---|---|---|---|---|---|---|
| | | 1 | 2 | 3 | 4 | 5 | 6 |
| (A) | HIPS-1 | 90 | - | - | 90 | - | - |
| | HIPS-2 | - | 90 | - | | 90 | - |
| | HIPS-3 | - | - | 90 | - | | 90 |
| (B) | (B)-2 | 10 | 10 | 10 | 10 | 10 | 10 |
| (C) | (C)-1 | - | - | - | 3 | 3 | 3 |
| | (C)-3 | 3 | 3 | 3 | - | - | - |
| Properties | Impact strength | 16 | 12 | 12 | 14 | 12 | 12 |
| | Tensile strength | 385 | 325 | 312 | 360 | 305 | 296 |
| | Gloss (45°) | 96 | 85 | 74 | 92 | 77 | 68 |
| | Chemical resistance | A | A | A | A | A | A |
| | Thermal deformation temperature | 90 | 85 | 85 | 88 | 84 | 87 |

As could be seen in Table 2, Examples 4-6 with the use of both (B)-2 and (C)-1 showed a little or no reduction in gloss and impact strength as compared to the results in Table 1, and significant increases in tensile strength and thermal deformation temperature. Also, Examples 1-3 containing (B)-2 and (C)-3 were the highest in mechanical properties and gloss.

[Comparative Example 1]

The procedure of Example 1 was repeated except that general propylene resin was used in place of the modified propylene resin with controlled crystalline properties.

[Comparative Example 2]

The procedure of Example 2 was repeated except that general propylene resin was used in place of the modified propylene resin with controlled crystalline properties.

[Comparative Example 3]

The procedure of Example 3 was repeated except that general propylene resin was used in place of the modified propylene resin with controlled crystalline properties.

[Comparative Example 4]

The procedure of Example 4 was repeated except that a radial styrene-butadiene-styrene block copolymer was used in place of the linear styrene-butadiene-styrene block copolymer.

[Comparative Example 5]

The procedure of Example 5 was repeated except that a radial styrene-butadiene-styrene block copolymer was used in place of the linear styrene-butadiene-styrene block copolymer.

[Comparative Example 6]

The procedure of Example 6 was repeated except that a radial styrene-butadiene-styrene block copolymer was used in place of the linear styrene-butadiene-s tyrene block copolymer.

**Table 3**

| | | Comparative Examples | | | | | |
|---|---|---|---|---|---|---|---|
| | | 1 | 2 | 3 | 4 | 5 | 6 |
| (A) | HIPS-1 | 90 | - | - | 90 | - | - |
| | HIPS-2 | - | 90 | - | - | 90 | - |
| | HIPS-3 | - | - | 90 | - | - | 90 |
| (B) | (B)-1 | 10 | 10 | 10 | - | - | - |
| | (B)-2 | - | - | - | 10 | 10 | 10 |
| (C) | (C)-2 | - | - | - | 3 | 3 | 3 |
| | (C)-3 | 3 | 3 | 3 | - | - | - |
| Properties | Impact strength | 15 | 12 | 11 | 8 | 7 | 7 |
| | Tensile strength | 336 | 275 | 276 | 335 | 285 | 272 |
| | Gloss (45°) | 46 | 43 | 35 | 59 | 50 | 41 |
| | Chemical resistance | A | A | A | A | A | A |
| | Thermal deformation temperature (°C) | 79 | 79 | 77 | 81 | 81 | 80 |

As could be seen in Table 3, Comparative Examples 1-3 with the use of the propylene resin with uncontrolled crystalline properties showed reductions in all properties excluding impact strength and chemical resistance, particularly in gloss. Particularly Comparative Example 1 showed about two times reduction in gloss as compared to Example 1, although there was a difference only in the modification or non-modification of the propylene resin between the two Examples. Also, Comparative Examples 4-6 with the use of the radial block copolymer as a compatibilizer in place of the linear block copolymer were very low in all properties excluding chemical resistance, particularly in impact strength, as compared to Examples.

### Industrial Applicability

As described above, the present invention provides the styrene-based thermoplastic resin composition in which a styrene-based block copolymer is used to effectively compatibilize a styrene-based resin with an olefinic resin, and the crystalline properties of the olefinic resin are controlled. Thus, the inventive composition is excellent in chemical resistance and thermal properties and has a great improvement, particularly in gloss, over the existing styrene-based blend resin.

Although a preferred embodiment of the present invention has been described for illustrative purposes, those skilled in the art will appreciate that various modifications, additions and substitutions are possible, without departing from the scope and spirit of the invention as disclosed in the accompanying claims.

## Claims

1. A styrene-based thermoplastic resin composition comprises:
(A) 50-90 parts by weight of a rubber-modified styrene-containing graft polymer;
(B) 10-50 parts by weight of a modified olefinic resin containing 0.2-1.0 parts, based on 100 parts by weight of the olefinic resin, of a nucleating agent; and
(C) 2-10 parts by weight, based on 100 parts by weight of the sum of the components (A) and (B), of a linear styrene-based block copolymer.

2. The composition of Claim 1, wherein the rubber-modified styrene-containing graft polymer is rubber-modified high impact polystyrene.

3. The composition of Claim 1 or 2, wherein the rubber-modified styrene-containing graft polymer contains polybutadiene rubber or styrene-butadiene rubber in an amount of 5-15 parts by weight based on the weight of the graft copolymer.

4. The composition of Claim 1, wherein the nucleating agent-containing olefinic resin has a number average molecular weight of 50,000-100,000 and a melt flow index of 0.1-2.0 (190°C/2,16 kg).

5. The composition of Claim 1 or 4, wherein the nucleating agent is at least one selected from the group consisting of 3,4-dimethyldibenzylidene, bis(2,5-methylbenzylidene)sorbitol, bis(para-ethylbenzylidene), sodium di(4-tert-buthylphenyl)phosphate, dibenzylidene sorbitol (DBS), aluminum par a-tert-butyl benzoate, and para-tert-butyl benzoic acid sodium salt, and talc.

6. The composition of Claim 1 or 4, wherein the olefinic resin is one or a mixture of two or more selected from the group consisting of low-density polyethylene, high-density polyethylene, polypropylene and an ethylene-propylene copolymer.

7. The composition of Claim 1, wherein the linear styrene-based block copolymer is one selected from the group consisting of linear styrene-butadiene block copolymers, linear styrene-isoprene block copolymers, linear styrene-ethylene-propylene block copolymers, linear styrene-butadiene-styrene block copolymers, linear styrene-butadiene-propylene block copolymers, linear styrene-isopreene-styrene block copolymers, and linear styrene-butadiene-propylene-styrene block copolymers.

8. The composition of Claim 1 or 7, wherein the linear styrene-based block copolymer has a styrene content of 30-50% by weight.

## Patentansprüche

1. Thermoplastische Harzzusammensetzung auf Styrolbasis, welche umfasst:
(A) 50 - 90 Gewichtsteile eines mit Kautschuk modifizierten, Styrol enthaltenden Propfpolymers;
(B) 10 - 50 Gewichtsteile eines modifizierten olefinischen Harzes enthaltend 0,2 bis 1,0 Teile eines Nukleierungsmittels, basierend auf 100 Gewichtsteilen des olefinischen Harzes; und
(C) 2 - 10 Gewichtsteile, basierend auf 100 Gewichtsteilen der Summe der Komponenten (A) und (B), eines linearen Blockcopolymers auf Styrolbasis.

2. Zusammensetzung nach Anspruch 1, wobei das mit Kautschuk modifizierte, Styrol enthaltende Pfropfpolymer kautschukmodifiziertes schlagfestes Polystyrol ist.

3. Zusammensetzung nach Anspruch 1 oder 2, wobei das mit Kautschuk modifizierte, Styrol enthaltende Pfropfpolymer Polybutadienkautschuk oder Styrol-Butadien-Kautschuk in einer Menge von 5 - 15 Gewichtsteilen, basierend auf dem Gewicht des Pfropfcopolymers, enthält.

4. Zusammensetzung nach Anspruch 1, wobei das Nukleierungsmittel enthaltende olefinische Harz ein Zahlenmittelmolekulargewicht von 50.000 - 100.000 und einen Schmelzflussindex von 0,1 - 2,0 (190°C / 2,16 kg) aufweist.

5. Zusammensetzung nach Anspruch 1 oder 4, wobei das Nukleierungsmittel wenigstens eines ausgewählt aus der Gruppe bestehend aus 3,4-Dimethyldibenzyliden, Bis(2,5-methylbenzyliden)sorbitol, Bis(para-ethylbenzyliden), Natriumdi(4-tert-butylphenyl)-phosphat, Dibenzylidensorbitol (DBS), Aluminium-para-tert-butylbenzoat, und para-tert-butyl-Benzoesäurenatriumsalz und Talk ist.

6. Zusammensetzung nach Anspruch 1 oder 4, wobei das olefinische Harz eines oder eine Mischung aus zwei oder mehreren ist, ausgewählt aus der Gruppe bestehend aus Polyethylen niedriger Dichte, Polyethylen hoher Dichte, Polypropylen und einem Ethylen-Propylen-Copolymer.

7. Zuammensetzung nach Anspruch 1, wobei das lineare Blockcopolymer auf Styrolbasis eines ist ausgewählt aus der Gruppe bestehend aus linearen Styrol-Butadien-Blockcopolymeren, linearen Styrol-Isopren-Blockcopolymeren, linearen Styrol-Ethylen-Propylen-Blockcopolymeren, linearen Styrol-Butadien-Styrol-Blockcopolymeren, linearen Styrol-Butadien-Propylen-Blockcopolymeren, linearen Styrol-Isopren-Styrol-Blockcopolymeren und linearen Styrol-Butadien-Propylen-Styrol-Blockcopolymeren.

8. Zusammensetzung nach Anspruch 1 oder 7, wobei das lineare Blockcopolymer auf Styrolbasis einen Styrolgehalt von 30 - 50 Gewichtsprozent aufweist.

## Revendications

1. Une composition de résine thermoplastique à base de styrène comprend :
(A) 50 à 90 parties en poids d'un polymère greffé contenant du styrène modifié par du caoutchouc ;
(B) 10 à 50 parties en poids de d'une résine oléfinique modifiée contenant 0,2 à 1,0 partie, sur la base de 100 parties en poids de la résine oléfinique, d'un agent de nucléation ; et
(C) 2 à 10 parties en poids, sur la base de 100 parties en poids de la somme des composants (A) et (B), d'un copolymère linéaire à blocs à base de styrène.

2. La composition de la revendication 1, où le polymère greffé contenant du styrène modifié par du caoutchouc est du polystyrène à haute résistance aux chocs modifié par du caoutchouc.

3. La composition de la revendication 1 ou 2, où le polymère greffé contenant du styrène modifié par du caoutchouc contient du caoutchouc polybutadiène ou du caoutchouc styrène-butadiène dans une quantité de 5 à 15 parties en poids sur la base du poids du copolymère greffé.

4. La composition de la revendication 1, où la résine oléfinique contenant l'agent de nucléation a un poids moléculaire d'un nombre moyen de 50.000 à 100.000 et un indice de fusion de 0,1 à 2,0 (190°C/2,16 kg).

5. La composition de la revendication 1 ou 4, où l'agent de nucléation est au moins un sélectionné dans le groupe constitué de 3,4-diméthyldibenzylidène, bis(2,5-méthylbenzylidène) sorbitol, de bis(para-éthylbenzylidène), phosphate de di(4-tert-butylphényl) de sodium, de dibenzylidène sorbitol (DBS), benzoate de para-tert-butyle d'aluminium et de sel de sodium d'acide benzoïque para-tert-butyle et de talc.

6. La composition de la revendication 1 ou 4, où la résine oléfinique est un composant ou un mélange de deux composants ou plus, sélectionné dans le groupe constitué d'un polyéthylène faible densité, d'un polyéthylène haute densité, d'un polypropylène et d'un copolymère d'éthylène-propylène.

7. La composition de la revendication 1, où le copolymère linéaire à blocs à base de styrène est un composant sélectionné dans le groupe constitué de copolymères linéaires à blocs de styrène-butadiène, de copolymères linéaires à blocs de styrène-isoprène, de copolymères linéaires à blocs de styrène-éthylène-propylène, de copolymères linéaires à blocs de styrène-butadiène-styrène, de copolymères linéaires à blocs de styrène-butadiène-propylène, de copolymères linéaires à blocs de styrène-isoprène-styrène et de copolymères linéaires à blocs de styrène-butadiène-propylène-styrène.

8. La composition de la revendication 1 ou 7, où le copolymère linéaire à blocs à base de styrène a une teneur en styrène de 30 à 50% en poids.
